# EUROPEAN PATENT SPECIFICATION

(11) **EP 3 205 914 B1**
(45) Date of publication and mention of the grant of the patent: **26.09.2018**
(21) Application number: 16154831.8
(22) Date of filing: 09.02.2016
(51) Int. Cl.: F16K 35/06, F16K 35/10

(54) **LOCKING DEVICE OF A GAS VALVE**
VERRIEGELUNGSVORRICHTUNG EINES GASVENTILS
DISPOSITIF DE VERROUILLAGE D'UNE SOUPAPE À GAZ

(43) Date of publication of application: 16.08.2017
(73) Proprietor: Abloy Oy, 80100 Joensuu (FI)
(72) Inventor: MALINEN, Perttu, 80160 Joensuu (FI)
(74) Representative: Berggren Oy, Helsinki & Oulu

(56) References cited:
- JP-U- S4 837 414
- US-A- 2 632 623
- US-A1- 2014 116 536
- US-B1- 6 994 106

## Description

### Field of technology

The invention relates to a locking device of a gas valve. The gas valve is a type of valve that is, for example, used in tank trucks.

### Prior art

Tank trucks are used to transfer gas especially locations wherein there are no distribution pipelines for gas. In order to fil the tank of a tank truck, there is at least one pipe for gas. The same pipe, or another pipe, can also be used for emptying the tank. The pipe or pipes are provided with a gas valve in order to open and to close the flow of gas.

The gas valve used in the gas truck is also provided with a plate in order to prevent accidental opening of the gas valve. The plate keeps the gas valve in a closing position so that for example movement of the gas truck or a careless movement of a hand does not open the gas valve. Different plates have been used generally for this purpose. For example US 2632623 discloses a plate for a gas valve to prevent accidental opening.

A locking device according to the preamble of claim 1 is known from US 2014/116536 A1. It has been noticed that at least part of the gas in the tank may disappear during transportation. So it has been deduced that an unauthorized opening of the gas valve may happen.

### Short description

The object of the invention is to eliminate the problem said above. The object is achieved in a way described in the independent claims. Dependent claims illustrate different embodiments of the invention.

A locking device of a gas valve 1 according to the invention has a first body part 6A and a second body part 6B. The both body parts have a slot 7A, 7B, which shape is arranged to match with a body 2 of the gas valve 1, The first and the second body part has also fixing holes 8A, 8B, and the locking device also comprises at least one fixing bolt 10 for the fixing holes in order to fix the first body part 6A and the second body part 6B against each other.

The first body part has also a cylinder body 11, which has an inner space 12 and openings 13A, 13B at a first end 11A and a second end 11B of the cylinder body. In the cylinder body, there is a cavity 11C that is in connection with the inner space.

The locking device has also a cover 14 that is provided with a hollow rod 16, the hollow rod having an open end 16A and a side hole 16B. The hollow rod is in the inner space 12 of the cylinder body.

The locking device has also a lock cylinder 17 having projection 19, which is spring biased, and a first end 17A with a key hole 18. The lock cylinder is in the cylinder body 11 and in the hollow rod 16 in such a way that the projection 19 is in the side hole 16B of the hollow rod, locking the lock cylinder 17 and the cover 14 with the cylinder body 11. The first end 17A of the lock cylinder 17 and the cover 14 are at least partly above the fixing holes 8A, 9A of the first body part 6A.

The cover 14 is arranged to prevent opening of the gas valve 1 when the lock cylinder 17 is locked. In the locked state the projection 19 is partly in the cavity 11C. The cover is also arranged to be turnable when the cylinder lock is unlocked, in which state the projection is at least sufficiently out of the cavity 11C, and so the gas valve can be opened.

### List of figures

In the following, the invention is described in more detail by reference to the enclosed drawings, where
- Figure 1: illustrates an example of a locking device according to the invention in an opening position,
- Figure 2: illustrates the locking device of Figure 1 in a locked position, and,
- Figure 3: illustrates an example of an exploded view of the embodiment of Figure 1.

### Description of the invention

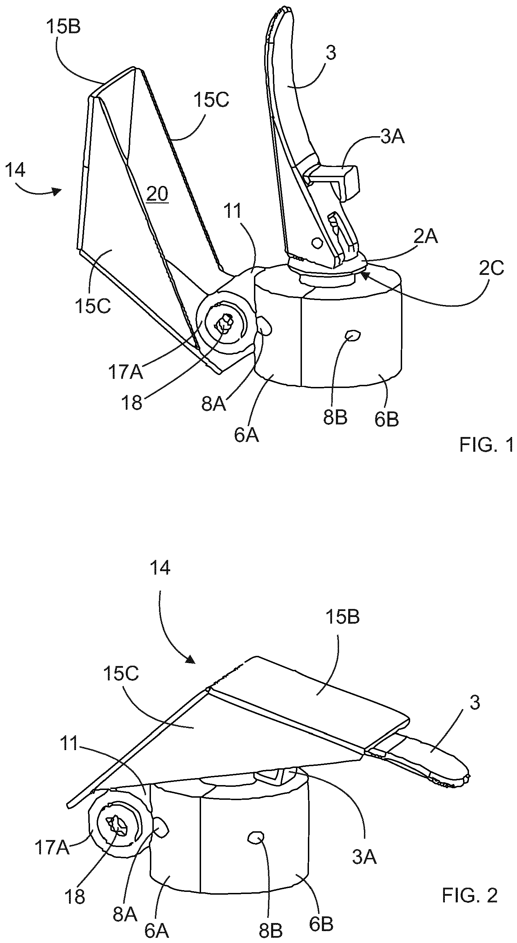

Figure 1 shows a locking device according to the invention in an opening position. As can be seen, the locking device has a cover 14 that is arranged to cover a part of the gas valve 1 when the locking device is in a locked position, which is illustrated in Figure 2. As showed in the figures the cover provides a cavity 20 for said part of the gas valve 1. The part is a handle 3 that is used to open and to close the gas valve 1.

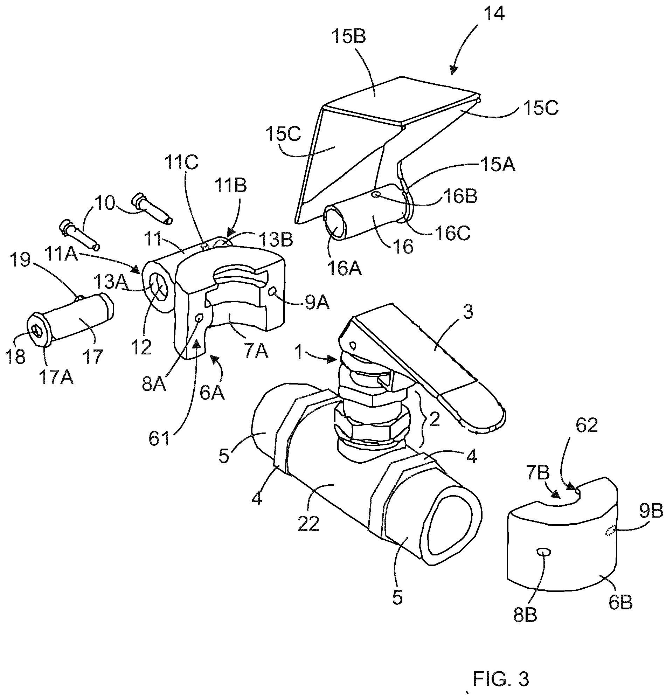

The gas valve 1 is also showed in Figure 3 which shows an exploded view of the locking device. The gas valve of Figure 3 is a certain type of gas valve for opening and closing the valve in order to allow or hinder gas flow in a pipe 5. The gas valve 1 has a body 2 which comprises valve devices to provide said opening and closing functions. The valve devices are not showed in the figures and they are not a part of the invention, as the gas valve itself is not a part of the invention. The body 2 has also an arm body 22 as showed in Figure 3. Between the arm body of the gas valve and the pipe 5 there are connections 4, which are used for attaching the gas valve with the pipe, and which do not allow the gas flow out of the pipe.

In addition the gas valve comprises a hook plate 3A, which is intended to keep the handle 3 in a closing position. In the closing position the hook plate is partly against a projection plate 2A of the body 2. The hook plate is then against an under surface 2C of the projection plate 2A. In this way, the movements of a gas truck should not accidentally open the gas valve 1.

However, the gas valve 1 has not a locking function, which means that the handle 3 can be turned open at any suitable time. Since it is desired that the gas valve operates properly, the structure of the gas valve should not be modified. In fact, some regulations forbid any modifications. The locking device according to the invention provides the locking function without any modification of the gas valve 1.

When looking at Figure 3 structures of the invention can be observed. A locking device of a gas valve 1 according to the invention has a first body part 6A and a second body part 6B. The both body parts have a slot 7A, 7B. A shape of the slot of each body part is arranged to match with a body 2 of the gas valve 1. The matching means in this context that the shapes of the slots does not need to follow exactly the shapes of the body 2 of the gas valve, but to provide suitable space for the body.

The first and the second body part have also fixing holes 8A, 8B, 9A, 9B and the locking device also comprises fixing bolts 10 for the fixing holes in order to fix the first body part 6A and the second body part 6B against each other. By using the fixing bolts in the fixing holes a tight connection can be provided, which can stand well against breaking efforts. The fixing bolts and the fixing holes can be threaded.

Another embodiment of the invention is that there is a hinge between the first body part 6A and the second body part 6B and a fixing bolt and fixing holes on the other side of the body parts. In the embodiment the body parts are turned towards each other and in this way covering a part of the body 2 of the gas valve. The fixing bolt and the fixing holes are used to finish the fixing of the turned body parts.

The first body part has also a cylinder body 11, which has an inner space 12 and openings 13A, 13B at a first end 11A and at a second end 11B of the cylinder body. The locking device has also a cover 14 that is provided with a hollow rod 16, which has an open end 16A and a side hole 16B. The hollow rod is situated in the inner space 12 of the cylinder body 11. Inside the cylinder body there is a cavity 11C, which is in connection with the inner space.

The locking device has also a lock cylinder 17 having projection 19 that is spring biased, and a first end 17A with a key hole 18. The lock cylinder is situated in the cylinder body 11 and in the hollow rod 16 in such a way that the projection 19 is in the side hole 16B of the hollow rod, locking the lock cylinder 17 and the cover 14 with the cylinder body 11. The spring that biases the projection out of the lock cylinder is arranged to push the projection out in such a way that projection is in the side hole 16B of the hollow rod in all states of the lock cylinder, like in a locked state and in an unlocked state.

The first end 17A of the lock cylinder and the cover 14 (more precisely the fixing part 15A of the cover) are against the ends 11A, 11B of the cylinder body and therefore keep the lock cylinder 17 and the hollow rod 16 in the cylinder body in this arrangement.

The cylinder body protects and covers the hollow rod and the lock cylinder. The hollow rod covers also the lock cylinder. So, the cylinder body 11 covers the locking connection provided by the projection 19.

The first end 17A of the lock cylinder 17 and the cover 14 are at least partly above the fixing holes 8A, 9A of the first body part 6A, which means that they prevent rotation of the fixing bolts 10 in order to remove them from the fixing holes 8A, 9A, 8B, 9B. The cover 14 is arranged to prevent opening of the gas valve 1 when the lock cylinder 17 is locked. This can be seen in Figure 2 wherein the cover prevents the turning of the handle 3. In the locked state the top of the projection 19 is in the cavity 11C, and so the cover cannot be turned open. In other words, the projection 19 is partly in the cavity 11C.

The cover 14 is also arranged to be turnable when the cylinder lock is unlocked. In this state the projection 19 is at least sufficiently out of the cavity 11C in order to allow opening of the gas valve. At least sufficiently out of the cavity means that if the top of the projection is still in the cavity, it does not hinder the turning of the cover (and the lock cylinder). If the projection is out of the cavity, it is clear that it does not hinder the turning of the cover.

As can be seen from Figure 2 the cover 14 is arranged to cover a part of the gas valve when lock cylinder is locked and to provide a cavity 20 for said part of the gas valve. The cover can be provided with a fixing part 15A whereto the hollow rod 16 is fixed providing a closed end 16C of the hollow rod 16. The cover 14 can be formed in such a way that it has an upper plate part 15B and side plates 15C, wherein another of the side plates provides said fixing part 15A.

The first body part 6A and the second body part 6B has a surfaces 61, 62 which are arranged to be against each other when fixing first and second body parts together. The surfaces can be flat which are easy to manufacture. The surfaces may alternative have matching forms, like projections and recesses, in order to provide additional security between the connection of the first and the second parts.

The first end 17A of the lock cylinder provides a protection part that is arranged to cover the opening 13A of the first end 11A of the cylinder body. So as can be seen the lock cylinder which can opened by a key and also can be locked is protected by the first end, the cylinder body 11 and cover 14. The first body part 6A and the second body part 6B cover most of the body 2 of the gas valve and the cover 14 covers at least part of the handle 3 of the gas valve at the locking position. As said the locking position is illustrated in Figure 2. At the locked position the cover 14 cannot be turned. It can be noted that the locking device provides a good protection against unauthorized opening of the valve. In addition, it is not needed to modify the gas valve itself. So, when the lock cylinder 17 is locked the cover 14 covers at least part of the handle and the cover cannot be turned open due to the projection 19. When the lock cylinder is opened by the key the projection is pulled towards the cylinder 17 and out of the cavity. Then cover 14 can be turned open in order to allow opening of the gas valve. Due to the projection 19 in the side hole 16B the lock cylinder 17 turns as well.

It is evident from the above that the invention is not limited to the embodiments described in this text but can be implemented in many other different embodiments within the scope of the independent claim.

## Claims

1. A locking device of a gas valve (1), which has a first body part (6A) and a second body part (6B), both body parts having a slot (7A, 7B), a shape of the slot of each body part being arranged to match with a body (2) of the gas valve (1), the first and the second body part having also fixing holes (8A, 8B, 9A, 9B), the locking device also comprising at least one fixing bolt (10) for the fixing holes in order to fix the first body part (6A) and the second body part (6B) against each other, **characterised by** the first body part having also a cylinder body (11), the cylinder body having an inner space (12) and openings (13A, 13B) at a first end (11A) and a second end (11B) of the cylinder body, the cylinder body having also a cavity (11C) in connection with the inner space (12), the locking device having also a cover (14) that is provided with a hollow rod (16), the hollow rod having an open end (16A) and a side hole (16B), and the hollow rod being in the inner space (12) of the cylinder body,
the locking device having also a lock cylinder (17) having a projection (19), which is spring biased, and a first end (17A) with a key hole (18), the lock cylinder being in the cylinder body (11) and in the hollow rod (16) in such a way that the projection (19) is in the side hole (16B) of the hollow rod, locking the lock cylinder (17) and the cover (14) with the cylinder body (11), the first end (17A) of the lock cylinder (17) and the cover (14) being at least partly above the fixing holes (8A, 9A) of the first body part (6A),
the cover (14) being arranged to prevent opening of the gas valve (1) when the lock cylinder (17) is locked in which state the projection (19) is partly in the cavity (11C), and the cover (14) being arranged to be turnable when the cylinder lock is unlocked, in which state the projection (19) is at least sufficiently out of the cavity (11C), in order to allow opening of the gas valve.

2. A locking device of a gas valve (1), according to claim 1, **characterised in that** the cover (14) is arranged to cover a part of the gas valve (1) when lock cylinder is locked and to provide a cavity for said part of the gas valve.

3. A locking device of a gas valve (1), according to claim 1 or 2, **characterised in that** the cover has a fixing part (15a) whereto the hollow rod (16) is fixed providing a closed end (16c) of the hollow rod (16).

4. A locking device of a gas valve (1), according to claim 1 **characterised in that** the cover (14) has an upper plate part (15B) and a side plates (15C), wherein another of the side plates provides said fixing part (15A).

5. A locking device of a gas valve (1), according to Claim 4, **characterised in that** the first body part (6A) and the second body part (6B) have surfaces (61, 62) which are arranged to be against each other when fixing first and second body parts together.

6. A locking device of a gas valve (1), according to Claim 5, **characterised in that** the surfaces (61, 62) are flat.

7. A locking device of a gas valve (1), according to Claim 5, **characterised in that** the surfaces (61, 62) has matching forms.

8. A locking device of a gas valve (1), according to Claim 4, **characterised in that** the first end (17A) of the lock cylinder provides a protection part that is arranged to be fixed into the opening (13A) of the first end (11A) of the cylinder body, covering said opening.

9. A locking device of a gas valve (1), according to any of Claim 1 - 8, **characterised in that** the locking device also comprises another fixing bolt (10) and further fixing holes (9A, 9B), for the other fixing bolt (10).

10. A locking device of a gas valve (1), according to any of Claim 1 - 8, **characterised in that** the locking device also comprises a hinge between the first body part (6A) and the second body part (6B).

## Patentansprüche

1. Verriegelungsvorrichtung eines Gasventils (1), die einen ersten Körperteil (6A) und einen zweiten Körperteil (6B) aufweist, wobei beide Körperteile einen Schlitz (7A, 7B) aufweisen, eine Form des Schlitzes von jedem Körperteil so angeordnet ist, dass sie zu einem Körper (2) des Gasventils (1) passt, der erste und zweite Körperteil auch Fixierlöcher (8A, 8B, 9A, 9B) aufweisen, die Verriegelungsvorrichtung auch mindestens einen Fixierbolzen (10) für die Fixierlöcher umfasst, damit der erste Körperteil (6A) und der zweite Körperteil (6B) aneinander fixiert sind, **dadurch gekennzeichnet, dass**
der erste Körperteil auch einen Zylinderkörper (11) aufweist, wobei der Zylinderkörper einen Innenraum (12) und Öffnungen (13A, 13B) an einem ersten Ende (11A) und einem zweiten Ende (11B) des Zylinderkörpers aufweist, wobei der Zylinderkörper auch eine Aussparung (11C) in Verbindung mit dem Innenraum (12) aufweist,
wobei die Verriegelungsvorrichtung auch eine Abdeckung (14) aufweist, die mit einer hohlen Stange (16) versehen ist, wobei die hohle Stange ein offenes Ende (16A) und ein seitliches Loch (16B) aufweist und sich die hohle Stange im Innenraum (12) des Zylinderkörpers befindet,
die Verriegelungsvorrichtung auch einen Schließzylinder (17) mit einem Ansatz (19) aufweist, der federbelastet ist, sowie einem ersten Ende (17A) mit einem Schlüsselloch (18), wobei sich der Schließzylinder im Zylinderkörper (11) und in der hohlen Stange (16) befindet, sodass sich der Ansatz (19) im seitlichen Loch (16B) der hohlen Stange befindet, wodurch der Schließzylinder (17) und die Abdeckung (14) mit dem Zylinderkörper (11) verriegelt werden, wobei sich das erste Ende (17A) des Schließzylinders (17) und die Abdeckung (14) zumindest teilweise über den Fixierlöchern (8A, 9A) des ersten Körperteils (6A) befinden,
wobei die Abdeckung (14) so angeordnet ist, dass sie ein Öffnen des Gasventils (1) verhindert, wenn der Schließzylinder (17) verriegelt ist, wobei sich der Ansatz (19) in diesem Zustand teilweise in der Aussparung (11C) befindet, und wobei die Abdeckung (14) so angeordnet ist, dass sie drehbar ist, wenn das Zylinderschloss entriegelt wird, wobei sich der Ansatz (19) in diesem Zustand ausreichend weit außerhalb der Aussparung (11C) befindet, dass er ein Öffnen des Gasventils zulässt.

2. Verriegelungsvorrichtung eines Gasventils (1) nach Anspruch 1, **dadurch gekennzeichnet, dass** die Abdeckung (14) so angeordnet ist, dass sie einen Teil des Gasventils (1) abdeckt, wenn der Schließzylinder verriegelt ist, und eine Aussparung für den Teil des Gasventils bereitstellt.

3. Verriegelungsvorrichtung eines Gasventils (1) nach Anspruch 1 oder 2, **dadurch gekennzeichnet, dass** die Abdeckung ein Befestigungsteil (15a) aufweist, an dem die hohle Stange (16) befestigt ist, wodurch die hohle Stange (16) mit einem geschlossenen Ende (16c) versehen ist.

4. Verriegelungsvorrichtung eines Gasventils (1) nach Anspruch 1, **dadurch gekennzeichnet, dass** die Abdeckung (14) einen oberen Plattenteil (15B) und eine Seitenplatte (15C) aufweist, wobei eine weitere der Seitenplatten den Befestigungsteil (15A) darstellt.

5. Verriegelungsvorrichtung eines Gasventils (1) nach Anspruch 4, **dadurch gekennzeichnet, dass** der erste Körperteil (6A) und der zweite Körperteil (6B) Flächen (61, 62) aufweisen, die so angeordnet sind, dass sie aneinanderliegen, wenn der erste und zweite Körperteil aneinander fixiert sind.

6. Verriegelungsvorrichtung eines Gasventils (1) nach Anspruch 5, **dadurch gekennzeichnet, dass** die Flächen (61, 62) eben sind.

7. Verriegelungsvorrichtung eines Gasventils (1) nach Anspruch 5, **dadurch gekennzeichnet, dass** die Flächen (61, 62) passende Formen aufweisen.

8. Verriegelungsvorrichtung eines Gasventils (1) nach Anspruch 4, **dadurch gekennzeichnet, dass** das erste Ende (17A) des Schließzylinder einen Schutzteil darstellt, der so angeordnet ist, dass er in der Öffnung (13A) des ersten Endes (11A) des Zylinderkörpers fixiert ist und so die Öffnung abdeckt.

9. Verriegelungsvorrichtung eines Gasventils (1) nach einem der Ansprüche 1 bis 8, **dadurch gekennzeichnet, dass** die Verriegelungsvorrichtung auch einen weiteren Fixierbolzen (10) und weitere Fixierlöcher (9A, 9B) für den weiteren Fixierbolzen (10) umfasst.

10. Verriegelungsvorrichtung eines Gasventils (1) nach einem der Ansprüche 1 bis 8, **dadurch gekennzeichnet, dass** die Verriegelungsvorrichtung auch ein Drehgelenk zwischen dem ersten Körperteil (6A) und dem zweiten Körperteil (6B) umfasst.

## Revendications

1. Dispositif de verrouillage d'une soupape de gaz (1) comportant une première partie de corps (6A) et une deuxième partie de corps (6B), les parties de corps comportant une fente (7A, 7B), une forme de la fente de chaque partie de corps étant conçue pour correspondre à un corps (2) de la soupape de gaz (1), les première et deuxième parties de corps comportant également des trous de fixation (8A, 8B, 9A, 9B), le dispositif de verrouillage comprenant également au moins un boulon de fixation (10) pour les trous de fixation, afin de fixer la première partie de corps (6A) et la deuxième partie de corps (6B) l'une contre l'autre, **caractérisé en ce que**
la première partie de corps comporte également un corps de cylindre (11), le corps de cylindre comportant un espace intérieur (12) et des ouvertures (13A, 13B) à une première extrémité (11A) et à une deuxième extrémité (11B) du corps de cylindre, le corps de cylindre comportant également une cavité (11C) en connexion avec l'espace intérieur (12),
le dispositif de verrouillage comporte également un couvercle (14) pourvu d'une tige creuse (16), la tige creuse comportant une extrémité ouverte (16A) et un trou latéral (16B), et la tige creuse étant située dans l'espace intérieur (12) du corps de cylindre,
le dispositif de verrouillage comporte également un cylindre de verrouillage (17) présentant une saillie (19) sollicitée par ressort, et une première extrémité (17A) avec un trou de serrure (18), le cylindre de verrouillage étant situé dans le corps de cylindre (11) et dans la tige creuse (16) de telle façon que la saillie (19) se trouve dans le trou latéral (16B) de la tige creuse, verrouillant le cylindre de verrouillage (17) et le couvercle (14) avec le corps de cylindre (11), la première extrémité (17A) du cylindre de verrouillage (17) et le couvercle (14) se trouvant au moins partiellement au-dessus des trous de fixation (8A, 9A) de la première partie de corps (6A),
le couvercle (14) est conçu pour empêcher l'ouverture de la soupape de gaz (1) lorsque le cylindre de verrouillage (17) est verrouillé, un état dans lequel la saillie (19) est partiellement située dans la cavité (11C), et le couvercle (14) est conçu pour pouvoir tourner lorsque le cylindre de verrouillage est déverrouillé, un état dans lequel la saillie (19) est au moins suffisamment sortie de la cavité (11C) pour permettre l'ouverture de la soupape de gaz.

2. Dispositif de verrouillage d'une soupape de gaz (1) selon la revendication 1, **caractérisé en ce que** le couvercle (14) est conçu pour couvrir une partie de la soupape de gaz (1) lorsque le cylindre de verrouillage est verrouillé et pour fournir une cavité pour ladite partie de la soupape de gaz.

3. Dispositif de verrouillage d'une soupape de gaz (1) selon la revendication 1 ou 2, **caractérisé en ce que** le couvercle comporte une partie de fixation (15a) sur laquelle la tige creuse (16) est fixée, fournissant une extrémité fermée (16c) de la tige creuse (16).

4. Dispositif de verrouillage d'une soupape de gaz (1) selon la revendication 1, **caractérisé en ce que** le couvercle (14) comporte une partie de plaque supérieure (15B) et des plaques latérales (15C), une autre des plaques latérales fournissant ladite partie de fixation (15A).

5. Dispositif de verrouillage d'une soupape de gaz (1) selon la revendication 4, **caractérisé en ce que** la première partie de corps (6A) et la deuxième partie de corps (6B) comportent des surfaces (61, 62) disposées de manière à s'appliquer l'une contre l'autre lors de la fixation des première et deuxième parties de corps entre elles.

6. Dispositif de verrouillage d'une soupape de gaz (1) selon la revendication 5, **caractérisé en ce que** les surfaces (61, 62) sont plates.

7. Dispositif de verrouillage d'une soupape de gaz (1) selon la revendication 5, **caractérisé en ce que** les surfaces (61, 62) présentent des formes correspondantes.

8. Dispositif de verrouillage d'une soupape de gaz (1) selon la revendication 4, **caractérisé en ce que** la première extrémité (17A) du cylindre de verrouillage fournit une partie de protection conçue pour être fixée dans l'ouverture (13A) de la première extrémité (11A) du corps de cylindre, couvrant ladite ouverture.

9. Dispositif de verrouillage d'une soupape de gaz (1) selon l'une quelconque des revendications 1 à 8, **caractérisé en ce que** le dispositif de verrouillage comprend également un autre boulon de fixation (10) et d'autres trous de fixation (9A, 9B) pour l'autre boulon de fixation (10).

10. Dispositif de verrouillage d'une soupape de gaz (1) selon l'une quelconque des revendications 1 à 8, **caractérisé en ce que** le dispositif de verrouillage comprend également une charnière entre la première partie de corps (6A) et la deuxième partie de corps (6B) .
